# EUROPEAN PATENT APPLICATION

(11) **EP 0 977 025 A1**
(43) Date of publication of application: **02.02.2000**
(21) Application number: 99901878.1
(22) Date of filing: 27.01.1999
(51) Int. Cl.: G01M 11/00

(54) **IMAGE PROCESSOR FOR OBSERVING OPTICAL FIBERS**

(30) Priority: 02.02.1998 JP 21098
(71) Applicant: The Furukawa Electric Co., Ltd., Tokyo 100-0005 (JP)
(72) Inventor: KOJIMA, Hidekazu, The Furukawa Electric Co., Ltd., Tokyo 100-0005 (JP)
(74) Representative: Dealtry, Brian
(86) International application number: JP9900325
(87) International publication number: WO9939172

(57) **Abstract**

An image processor for optical fiber observation which is installed in the system of an optical fiber fusion splicer and used. The image processor for optical fiber observation which can output image signals from TV camera (1) to TV monitor (2), and which processes the images from the TV camera (1) and can output desired information concerning optical fibers (4a) and (4b) projected in the images, is provided with scanning conversion unit (5) which can rotate the images from the TV camera (1) by 90° and output them to the TV monitor (2). Thereby, the images filmed by the TV camera disposed lengthwise can be converted by 90° and projected on the TV monitor disposed widthwise.

## Description

### Technical Field

The present invention relates to an image processor for optical fiber observation which is an image processor for processing images scanned by a TV camera, and is used to make optical fibers projected on a TV monitor easy to observe when the optical fibers connected to each other by, for example, an optical fiber fusion splicer, are scanned by the TV camera and projected on the TV monitor, and the optical fibers in the image are detected, moved from the information, connected to each other, and automatically positioned.

### Background Art

When two optical fibers are welded and connected to each other by an optical fiber fusion splicer, the two optical fibers are scanned by a TV camera, the image is processed by an image processor to detect the optical axes of the optical fibers, and based on signals from the image processor, the optical fibers are moved and two optical axes thereof are automatically positioned.

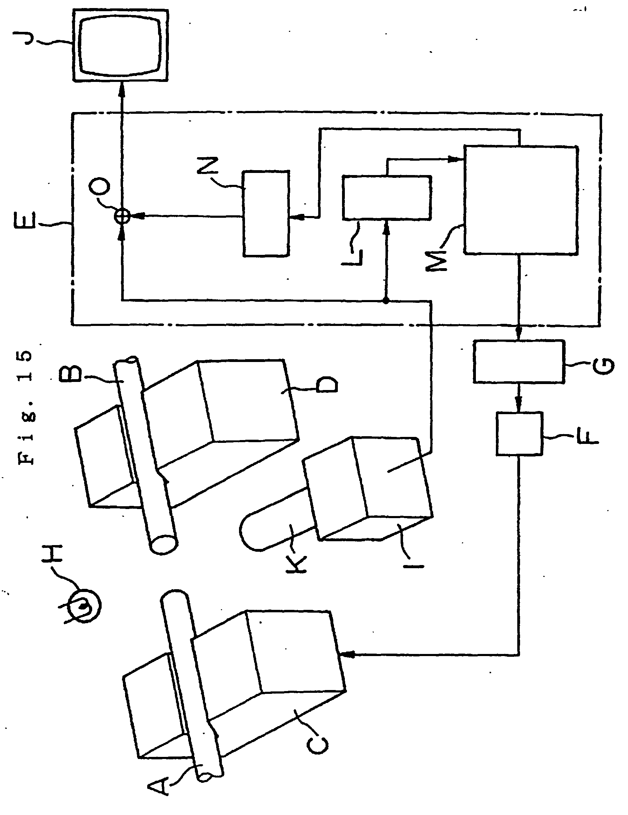

Fig. 15 is a general view showing an entire conventional optical fiber fusion splicer. The optical fiber fusion splicer is equipped with positioning bases C and D for individually setting the optical fibers A and B, and one of the bases is automatically controlled by the signals from image processor E so as to be movable. This movable side positioning base C is connected with motor F and drive control circuit G which receives the signals from the image processor E to control the drive of the motor F. Also, the optical fiber fusion splicer is provided with light source H for illuminating the optical fibers A and B set on the positioning bases C and D, and TV camera I for scanning the optical image transmitted through the optical fibers A and B. The TV camera I is connected to the image processor E, and the image processor E is connected to TV monitor J for observation of scanned images. Furthermore, microscope K is attached to the front end of the TV camera I so as to enlarge and film the confronted portions of the two optical fibers A and B.

The image processor E with the system in Fig. 15 is arranged so that the video signals inputted from the TV camera I are A/D converted and the image is memorized in frame memory L. Also, the image processor E is arranged so that the image in the frame memory L is processed by computing circuit M, information necessary for adjusting optical axes of the optical fibers A and B is obtained, and signals for positioning control can be outputted to the drive control circuit G of the optical fiber fusion splicer. The computing circuit M outputs information about the results of the image processing and operation progressing status to graphic circuit N, and video signals including text (letters) and graphic images (diagrams) are generated at the same graphic circuit N. The video signals are synthesized with the video signals from the TV camera I and then outputted to the TV monitor J.

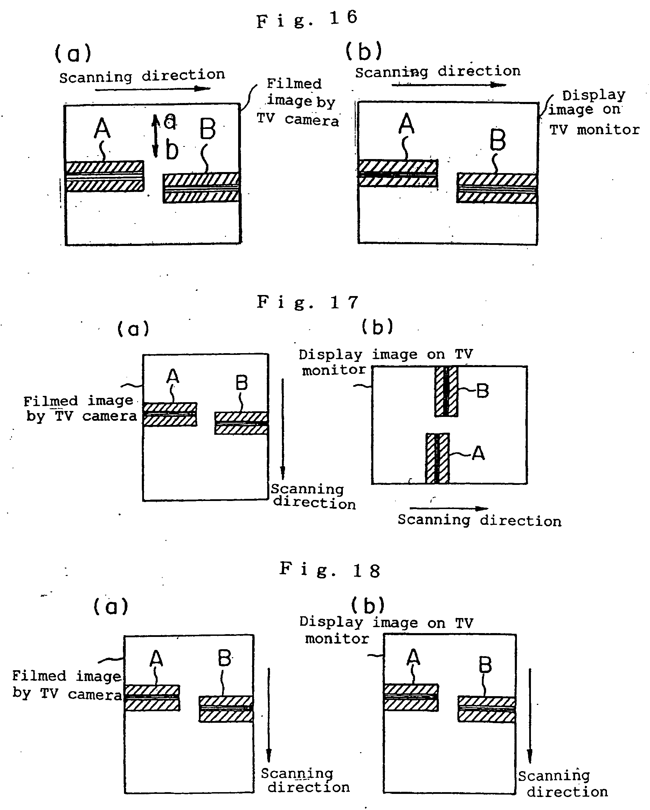

In the system of Fig. 15, the TV camera I is set so as to scan the confronted portions of the two optical fibers A and B supported on the positioning bases C and D to observe the shifting of the axes of both optical fibers A and B. In this case, if the optical fibers A and B are normally scanned by using the general TV camera I in which the resolution ratio of the horizontal and vertical directions is 4 to 3, the TV camera I scans an image as shown in Fig. 16(a), and an image as shown in Fig. 16(b) is projected on the TV monitor J. However, in this condition, the resolution in the shifting directions of the axes of the optical fibers A and B (the arrow a-b direction in Fig. 16(a)) is low, which is incompatible with aligning the axes with high accuracy. Therefore, priorly, the scanning line direction of the TV camera I is aligned with the direction orthogonal to the optical axes of the optical fibers A and B as shown in Fig. 17(a), and then the TV camera I is set. However, by only these operations, the images of the optical fibers A and B projected on the TV monitor J are rotated by 90° with respect to the image screen as shown in Fig. 17(b). Accordingly, in the prior-art, the TV monitor J is set by also being rotated by 90°, and the directions of the image scanned by the TV camera I (Fig. 18 (a)) and the image projected on the TV monitor J (Fig. 18(b)) are aligned with each other to prevent visual confusion. Thus, even when the optical fibers A and B are scanned by using the general TV camera I in which the resolution ratio is 4 to 3, the images are aligned in a direction of high resolution, that is, the horizontal direction of the screen and the scanning line direction are aligned with the shifting direction of the axes of the optical fibers A and B, whereby the axial shifting of the optical fibers can be observed with high accuracy, also the accuracy of the image processing is improved to enable accurate alignment of optical axes, and visual confusion can be eliminated.

In the system of Fig. 15, the scanning line direction of the TV camera I is set orthogonal to the optical axes of the optical fibers A and B so that the axial shifting of the optical fibers A and B can be observed by the TV camera with high accuracy, and in order to make the images easy to observe, the TV monitor J is set by also being rotated by 90°, therefore, image processing accuracy for the optical fibers A and B is improved, and the screen compositions of the TV camera I and TV monitor J are matched. However, the following themes still remain.
① Since the TV monitor J directed so as to be longer than it is wide by being rotated by 90° does not correspond with the field of vision of a human being, an operator may feel disoriented and cause fatigue.
② When the TV monitor J is rotated by 90°, since the display range in the horizontal direction becomes narrower, the number of letters to be displayed per line becomes less, and the number of lines for displaying a sentence becomes greater, therefore information about text or graphic images displayed on the TV monitor J become difficult to read and watch.
③ As well known, in the TV monitor J which is an aperture grill tube, although the screen is curved in the horizontal direction, the vertical direction is flat, so that fluorescent light is only slightly reflected n the screen, and therefore, the screen is easy to watch. However, if the screen is rotated by 90° for use, such an advantage is eliminated.
④ In the newest display such as a liquid crystal display or a plasma display, although the visual angle range is provided so as to match the field of vision by means of a non-reflecting filter and coating layer attached externally, such an advantage is eliminated if the monitor is rotated by 90°.
⑤ The abovementioned problems may cause lowering of the operation effect, which may lead to delay of optical fiber netting constructions which play key roles in communication networks.

The object of the invention is to provide an image processor for optical fiber observation in which the above problems can be solved.

### Disclosure of Invention

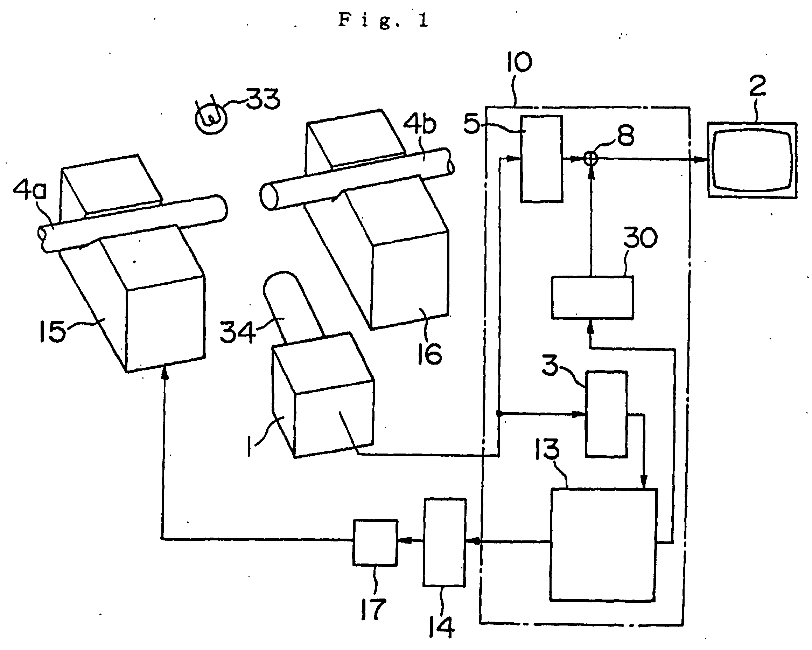

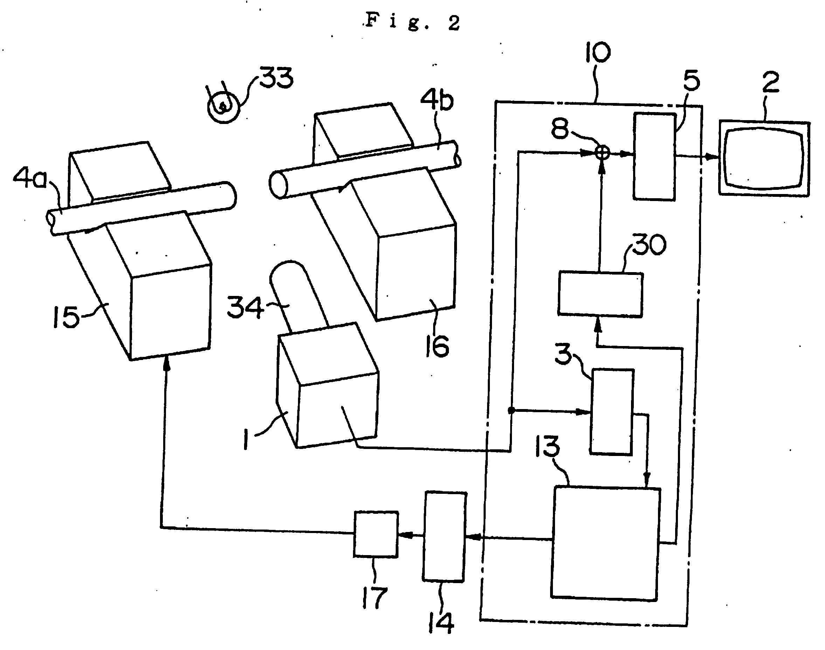

An image processor for optical fiber observation according to the first aspect of the invention which, as shown in Fig. 1 and Fig. 2, can output the image signals from TV camera 1 to TV monitor 2, and can output desired information concerning optical fibers 4a and 4b projected in the images, wherein said image processor for optical fiber observation is provided with scanning conversion unit 5 which can rotate the images from the TV camera 1 by 90° and output the images to the TV monitor 2.

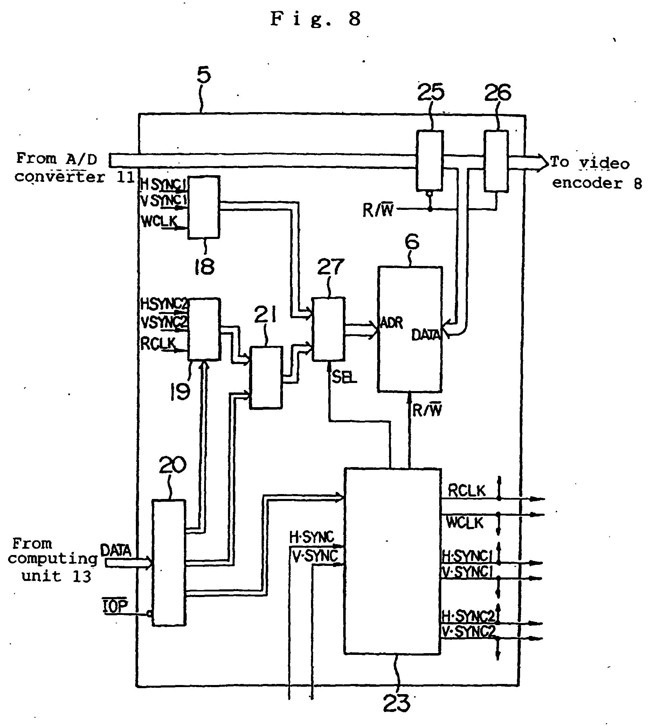

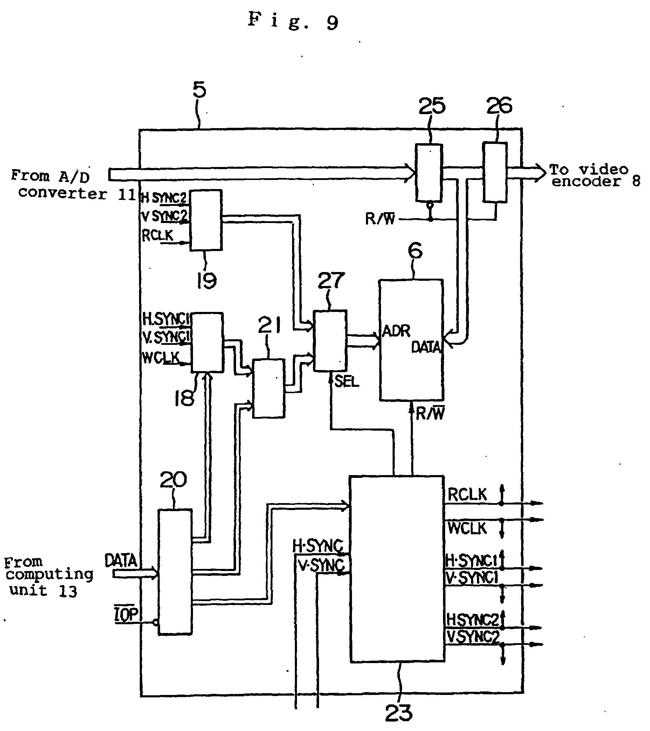

An image processor for optical fiber observation according to the second aspect of the invention is characterized in that, in the abovementioned image processor for optical fiber observation according to the first aspect of the invention, as shown in Fig. 8 and Fig. 9, the scanning conversion unit 5 is provided with an image memory unit for scanning conversion 6 for memorizing the inputted images, and by converting data reading and writing addresses at the image memory unit for scanning conversion 6, the images rotated by 90° are read out from the image memory unit for scanning conversion 6 and outputted.

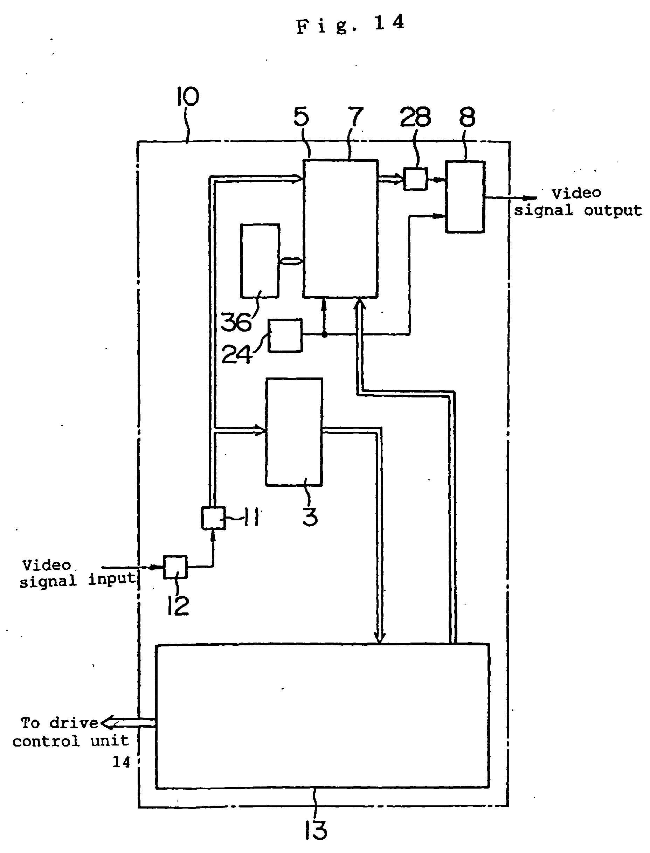

An image processor for optical fiber observation according to the third aspect of the invention is characterized in that, in the abovementioned image processor for optical fiber observation according to the first aspect of the invention, as shown in Fig. 14, the scanning conversion unit 5 is provided with information processor 7 such as a digital signal processor, etc., and a software program in which an information processing method by means of the information processor 7, and the information processor 7 rotates the images inputted in the scanning conversion unit 5 by 90° and outputs them.

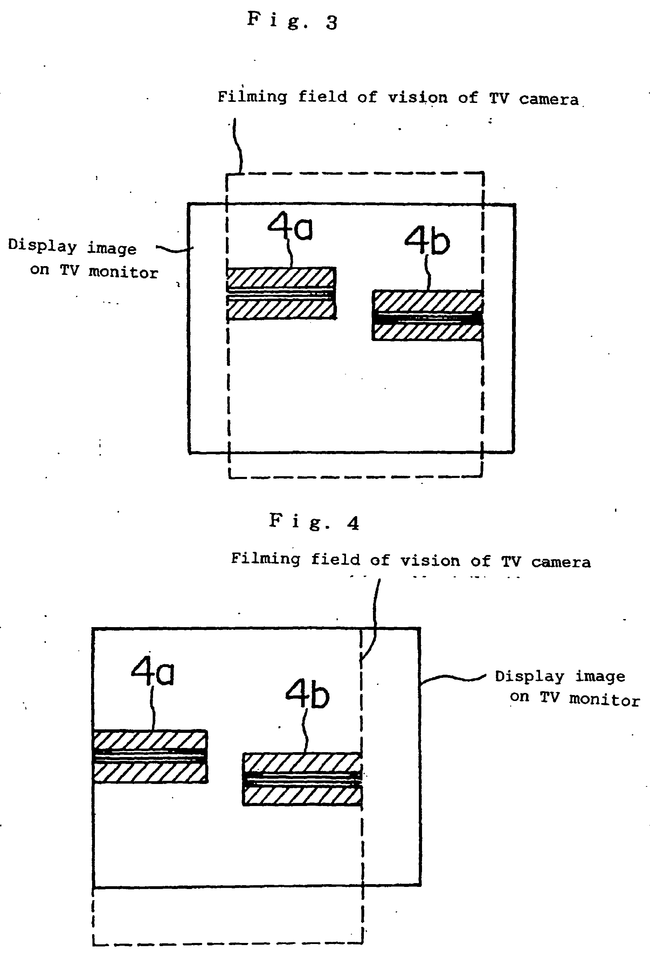

An image processor for optical fiber observation according to the fourth aspect of the invention is characterized in that, in the abovementioned image processor for optical fiber observation according to the first, second, or third aspect of the invention, as shown in Fig. 3 through Fig. 6, the scanning conversion unit 5 has a function for changing one or more of either the vertical magnification, horizontal magnification, amount of vertical offset, and/or the amount of horizontal offset of an image.

An image processor for optical fiber observation according to the fifth aspect of the invention is characterized in that, in the abovementioned image processor for optical fiber observation according to any of the first through fourth aspects of the invention, as shown in Fig. 1, Fig. 2, Fig. 7, Fig. 10, and Fig. 14, image synthesizer unit 8 is provided by which the signals formed by synthesizing the image scanned by the TV camera 1 with desired information can be outputted to the TV monitor 2.

An image processor for optical fiber observation according to the sixth aspect of the invention is characterized in that, in the abovementioned image processor for optical fiber observation according to the fifth aspect of the invention, as shown in Fig. 1, Fig. 7, and Fig. 14, the scanning conversion unit 5 is provided at the front stage of the image synthesizer unit 8.

An image processor for optical fiber observation according to the seventh aspect of the invention is characterized in that, in the abovementioned image processor for optical fiber observation, as shown in Fig. 2, the scanning conversion unit 5 is provided at the rear stage of the image synthesizer unit 8.

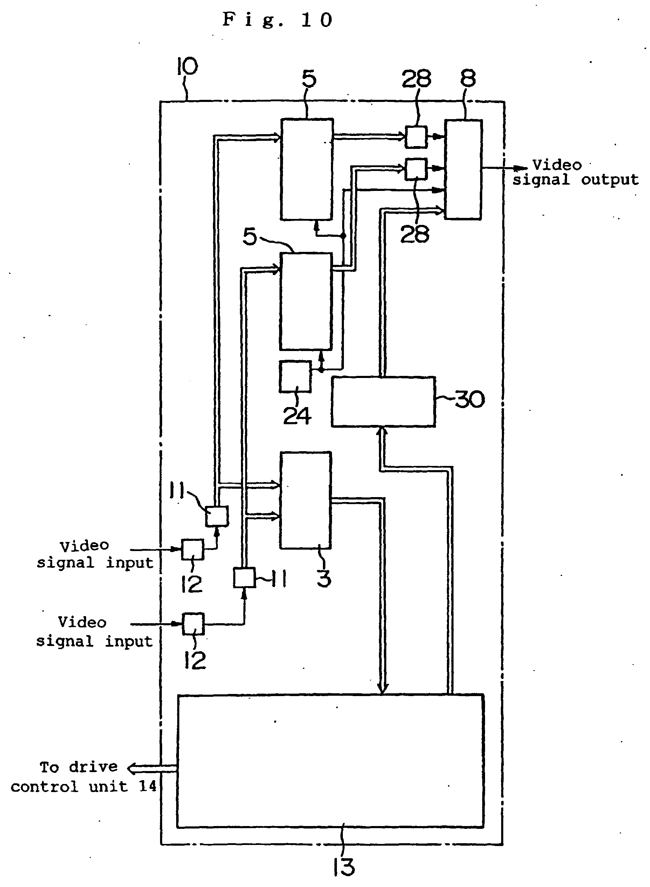

An image processor for optical fiber observation according to the eighth aspect of the invention is characterized in that, in the abovementioned image processor for optical fiber observation according to any of the first through seventh aspects of the invention, as shown in Fig. 10 through Fig. 13, the image signals can be inputted from two or more TV cameras 1, and these signal images are synthesized or switched to be signals for one TV monitor 2, whereby the signals can be outputted.

By the image processor for optical fiber observation according to the first aspect of the invention, since the axial shifting of the optical fibers 4a and 4b can be observed with high accuracy, and the TV monitor 2 can be disposed widthwise as in the normal condition, an operator who visually recognizes the optical fibers 4a and 4b does not feel disoriented, and this contributes to smooth operations.

By the image processor for optical fiber observation according to the second aspect of the invention, since the rotation of the images is performed in hardware by the scanning conversion unit 5 equipped with the image memory unit for scanning conversion 6, the image processing can be performed at a high speed.

By the image processor for optical fiber observation according to the third aspect of the invention, since the rotation of the images is performed in software by the information processor 7 and a software program, depending on the software program, various processing functions can be added and changed. Therefore, by re-writing a software program, up-to-date functions can always be provided. Furthermore, the information processor 7 can be made to prepare and synthesize graphics information, and if an information processor 7 with high processing capacity is used, the circuit can be simplified to reduce the device cost.

By the image processor for optical fiber observation according to the fourth aspect of the invention, since the vertical magnification, horizontal magnification, amount of vertical offset, and amount of horizontal offset of the images can be changed at the scanning conversion unit 5, a screen which is easy to operate by an operator can be obtained.

By the image processor for optical fiber observation according to the fifth aspect of the invention, the processor is compatible since useful information for the operator can be superimposed on the TV monitor 2.

By the image processor for optical fiber observation according to the eighth aspect of the invention, since two or more TV cameras 1 are connected to monitor the image processing and the image, highly accurate image processing and observation can be performed by using a plurality of TV cameras 1.

### Brief Description of Drawings

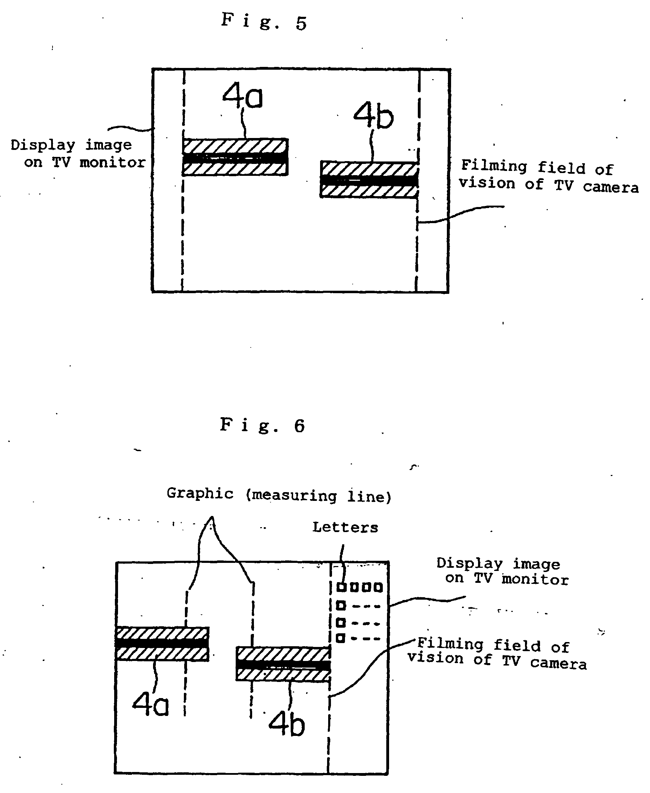

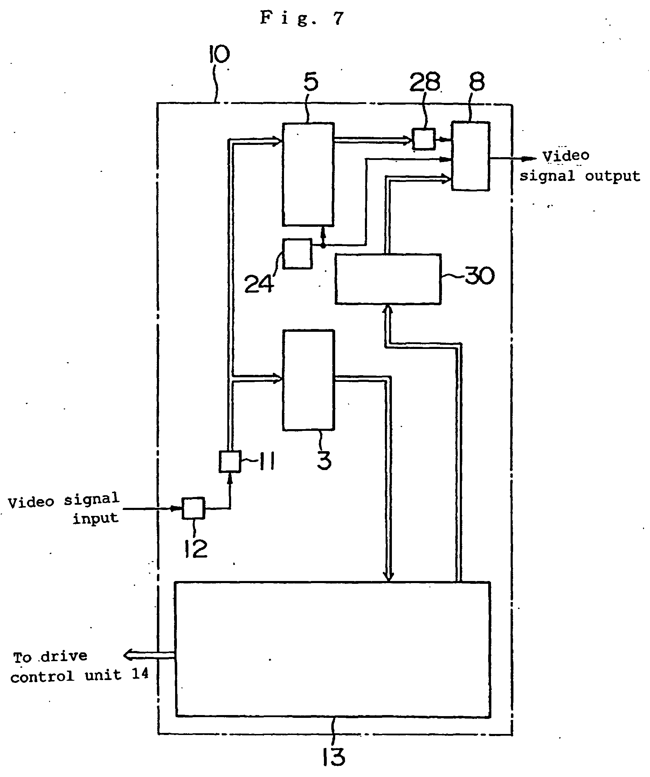

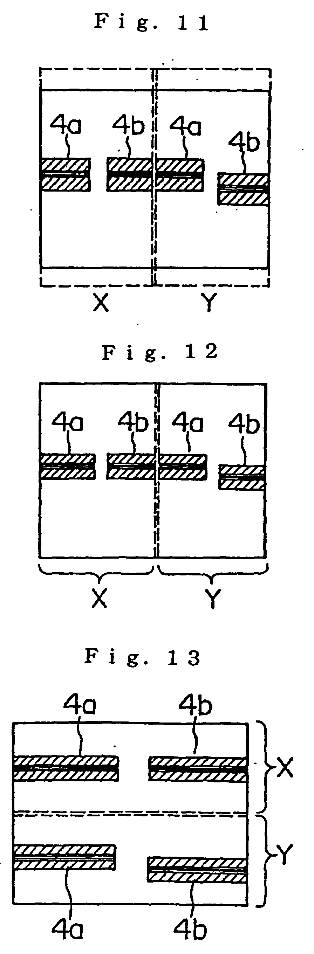

Fig. 1 shows the entire outline of the optical fiber fusion splicer comprised of using the image processor for optical fiber observation of the invention, and is a drawing of an example in which the scanning conversion unit is provided at the front stage of the image synthesizer unit, Fig. 2 shows the entire outline of the optical fiber fusion splicer comprised of using the image processor for optical fiber observation of the invention, and is a drawing of an example in which the scanning conversion unit is provided at the rear stage of the image synthesizer unit, Fig. 3 is an explanatory view showing the first example of the image display in the image processor for optical fiber observation of the invention, Fig. 4 is an explanatory view showing the second example of the image display in the image processor for optical fiber observation of the invention, Fig. 5 is an explanatory view showing the third example of the image display in the image processor for optical fiber observation of the invention, Fig. 6 is an explanatory view showing the fourth example of the image display in the image processor for optical fiber observation of the invention, Fig. 7 is a block diagram showing the first example of the image processor for optical fiber observation shown in Fig. 1, Fig. 8 is a block diagram showing the first example of the scanning conversion unit shown in Fig. 7, Fig. 9 is a block diagram showing the second example of the scanning conversion unit shown in Fig. 7, and Fig. 10 is a block diagram showing the second example of the image processor for optical fiber observation shown in Fig. 1. Additionally, Fig. 11 is an explanatory view showing the first example of the image display in the image processor for optical fiber observation of Fig. 10, Fig. 12 is an explanatory view showing the second example of the image display in the image processor for optical fiber observation in Fig. 10, Fig. 13 is an explanatory view showing the third example of the image display in the image processor for optical fiber observation in Fig. 10, Fig 14 is a block diagram showing the third example of the image processor for optical fiber observation shown in Fig. 1, Fig. 15 is a general view showing the entire optical fusion splicer comprised by using the conventional image processor for optical fiber observation, and Fig. 16 is an explanatory view showing the first examples of image filming and image display in the conventional image processor for optical fiber observation, wherein (a) is a drawing of the filmed images by the TV camera, and (b) is a drawing of the display screen of the TV monitor. Furthermore, Fig. 17 is an explanatory view showing the second examples of image filming and image display in the conventional image processor for optical fiber observation, wherein (a) is a drawing of the filmed images by the TV camera, and (b) is a drawing of the display screen of the TV monitor. Fig. 18 is an explanatory view showing the second examples of the image filming and image display in the conventional image processor for optical fiber observation, wherein (a) is a drawing of the filmed images by the TV camera, and (b) is a drawing of the display screen of the TV monitor.

### Best Mode for Carrying Out the Invention

For a detailed description of the invention, each embodiment of the invention shall be described with reference to the attached drawings.

### (Embodiment 1)

Fig. 1 is a general view showing the entire optical fiber fusion splicer comprised of using the image processor for optical fiber observation 10 of the invention. In this device, the TV camera 1 outputs analog video signals, the TV monitor 2 inputs analog video signals, and from these, the analog video signals are inputted/outputted to the image processor for optical fiber observation 10. Also, the TV camera 1 of Fig. 1 is set so that the scanning line direction is orthogonal to the optical axes of the optical fibers 4a and 4b, and the filming field of vision is made long lengthwise as shown by the dotted lines in Fig. 3, while the TV monitor 2 is set so that the screen is long widthwise as in the normal condition, and its image display area is long widthwise as shown by the solid lines in Fig. 3. Furthermore, microscope 34 is attached to the front end of the TV camera 1 to enlarge and film the confronted portions of the optical fibers 4a and 4b, and at the opposite side sandwiching the optical fibers 4a and 4b of the TV camera 1, light source 33 is provided. The TV camera 1 and TV monitor 2 are activated when receiving the synchronization signal, and in this case, are activated by the synchronization signals generated at the image processor for optical fiber observation 10.

The image processor for optical fiber observation 10 of the invention is equipped with A/D converter 11 for converting the video signals from the TV camera 1 (Fig. 1) into digital signals as shown in Fig. 7, and is arranged so that the digital signals from the A/D converter 11 are inputted in the frame memory (image memory unit) 3 and the scanning conversion unit 5. In a normal NTSC method TV camera 1, 30 images are taken per minute, and by this frame rate, the images are inputted in the frame memory 3 and the scanning conversion unit 5. Then, the images inputted in the frame memory 3 are processed by the computing unit 13, and the results are outputted to drive control unit 14 in Fig. 1. Also, the images inputted in the scanning conversion unit 5 are inputted in the image synthesizer unit (hereinafter, referred to as a video encoder) 8 via the D/A converter 28, and herein, the images are synthesized with the video signals from the graphic circuit 30, and outputted to the TV monitor 2. Furthermore, 12 in Fig. 7 is an input processing circuit, and 24 is a synchronization signal generator. Details of each part shall be described below.

The abovementioned frame memory 3 in Fig. 7 is a video memory for recording images, which has a memory capacity for which at least images for one screen can be stored. New images are stored and renewed in this frame memory 3 per 1/30 seconds.

The abovementioned computing unit 13 in Fig. 7 performs the image processing of the images stored in the frame memory 3, and outputs the signals to the drive control unit 14 and graphic circuit 30 in Fig. 1. Although details of the process in the computing unit 13 are not described here, by the unit, the images are read out and processed each time when renewing the images in the frame memory 3, information concerning the shifting of the optical axes of the optical fibers 4a and 4b is calculated from the images, and the information is outputted to the drive control unit 14. And, the drive control unit 14 in Fig. 1 drives the motor 17 and moves the positioning base 15 based on the signals, and these movements and image processes are repeated several times, whereby the optical axes of the optical fibers 4a and 4b set on the positioning bases 15 and 16 are gradually aligned with each other.

The scanning conversion unit 5 of Fig. 7 has a circuit arrangement as shown in Fig. 8, has an image memory unit for scanning conversion (hereinafter, referred to as memory) with a capacity for which at least images for one screen of the video camera 1 which is A/D converted can be stored, and furthermore, is equipped with circuits for controlling the writing of images into the memory 6 and reading the images from the memory 6. The process concerning the writing of images (image data) into the memory 6 and the reading image data from the memory 6 shall be described below.

W (write) address counter 18 in Fig. 8 uses synchronization signals HSYNC1 (horizontal synchronization signal) and VSYNC1 (vertical synchronization signal) to be used for controlling the TV camera 1 to generate a written-in address of the image data to the memory 6, while R (read) address counter 19 uses synchronization signals HSYNC2 and VSYNC2 to be used for controlling the TV monitor 2 to generate a read-out address of the image data from the memory 6. Data latch 20 outputs signals to the R address counter 19 based on the image magnification setting information stored in the data latch 20 to change the data read-out address in the counter 19, whereby the images can be read out from the memory 6 with an optional magnification. Also, the data latch 20 outputs signals to adder 21 based on the image offset setting information stored in the data latch 20 to add the offset value corresponding to the image offset setting information to the address from the R address counter 19, whereby the images optionally offset can be read out from the memory 6. Furthermore, between the W address counter 18 and R address counter 19, a relationship to enable switching between the vertical and horizontal directions of the screen is made, and when the image data is written in the memory 6 by using the address from the W address counter 18, and the image data is read out from the memory 6 by using the address from the R address counter 19, the image data (images) turns in a rotated condition by 90° with respect to the images of the TV camera 1. Also, the image magnification setting information and image offset setting information, etc., stored in the data latch 20 can be changed by the computing unit 13 of the image processor 10 shown in Fig. 7, and the change can be performed by inputting data from inputting devices such as an unillustrated operation button or keyboard, etc., into the computing unit 13.

RW (read/write) control circuit 23 in Fig. 8 generates various signals required to control the scanning conversion unit 5 based on the synchronization signals HSYNC and VSYNC from the synchronization signal generator 24 shown in Fig. 7 and the setting information stored in the data latch 20. In this case, write-in signal WCLK and read-out signal RCLK of the video signal data, synchronization signals HSYNC1 and VSYNC1 of the TV camera 1, synchronization signals HSYNC2 and VSYNC2 of the TV monitor 2, switching signal SEL of the memory address, and memory read/write switching signal R/W (the bar on the W in the figure shall be omitted) are generated. Then, the writing-in and reading-out of the memory 6 are performed once in one pixel time unit. According to the signals outputted from this RW control circuit 23, the image data from the TV camera 1 is transmitted to the memory 6 via the W data buffer 25, and also, the image data to be displayed on the TV monitor 2 is read out from the memory 6 via the R data buffer 26. The timing of the data writing and reading at the W data buffer 25 and R data buffer 26 are controlled by the read/write switching signal R/W, respectively.

Operation outline for the scanning conversion unit 5 shall be collectively described below with reference to Fig. 8. When the synchronization signals HSYNC1 and VSYNC1 from the RW control circuit 23 are outputted to the TV camera 1 in Fig. 1, in accordance with the synchronization signals, video signals are outputted from the TV camera 1, and the video signals are accumulated in the W data buffer 25 via the A/D converter 11 in Fig. 7. In accordance with the write-in signal WCLK, image data is transmitted and stored from the W data buffer 25 into the memory 6. At this time, the address from the W address counter 18 which integrates the write-in address corresponding to the scanning of the TV camera 1 by means of the synchronization signals HSYNC1 and VSYNC1 is selected at the selector 27 and transmitted to the memory 6, and the digital value of the video signal from the TV camera 1 is written in the memory 6. Meanwhile, as for data reading from the memory 6, the address of the R address counter 19 which integrates the read-out address corresponding to the scanning of the TV monitor 2 by means of the synchronization signals HSYNC2 and VSYNC2 from the RW control circuit 23 is added with a desired offset amount by the adder 21, selected at the selector 27, and transmitted to the memory 6, and the address data which is obtained by adding the offset to the read-out address is read out from the memory 6, and sent to the R data buffer 26. Then, when the R data buffer 26 is permitted to be output, the image data is outputted from the buffer 26.

The image outputted from the R data buffer 26 is rotated by 90° with respect to the image of the TV camera 1 as shown in Fig. 3 through 6. Furthermore, according to the set values of the image magnification setting information and image offset setting information in the data latch 20, the image size and image position are changed. For example, as shown in Fig. 4, the filming field of vision of the TV camera 1 (dotted lines) is offset leftward on the display screen (solid lines) of the TV monitor 2, the filming field of vision (dotted lines) of the TV camera 1 is reduced to the display screen (solid lines) of the TV monitor 2 and the entirety is displayed as shown in Fig. 5, or the filming field of vision (dotted lines) of the TV camera 1 which is reduced and displayed is offset leftward and displayed on the display screen (solid line) of the TV monitor 2. In Fig. 6, text and graphics information generated in the graphic circuit 30 is superimposed in the vacant space at the right side of the screen.

The abovementioned video encoder 8 in Fig. 7 synthesizes the video signal outputted from the scanning conversion unit 5 with the other video signal to output a synthesized video signal, in this case, the image outputted from the scanning conversion unit 5 can be synthesized with the video signal generated in the graphic circuit 30 described later.

When the image processing progress information and image processing results, etc., are outputted as data from the computing unit 13 in Fig. 7, based on the data, the abovementioned graphic circuit 30 in Fig. 7 generates text (letters) and graphics (graphic images), etc., and outputs them as video signals to the video encoder 8. For example, as shown in Fig. 6, text information showing the contents and status of the image processing and graphic information showing the measuring lines of the optical fibers 4a and 4b are generated and enabled to be displayed on the TV monitor 2.

### (Embodiment 2)

In the image processor for optical fiber observation of the invention, the scanning conversion unit in Fig. 8 may be arranged as shown in Fig. 9. The magnification of the screen and change in the offset amount are thus performed when writing the image data into the memory 6. Therefore, in Fig. 9, the signal of the data latch 20 is inputted in the W address counter 18 to enable changing of the screen size, and also, at the W address counter 18 side, adder 21 is provided to perform offsetting the screen. Although not illustrated, it is naturally possible that the signals from the data latch 20 are inputted in the W address counter 18 and R address counter 19, respectively, and adders 21 are provided for the W address counter 18 and R address counter 19, respectively, whereby image size change and offset change are performed by the address operation in data writing-in and by the address operation in data reading-out.

### (Embodiment 3)

Fig. 10 shows another example of the image processor for optical fiber observation of the invention, wherein two video cameras 1 are connected to each other, and the video signals outputted from these TV cameras 1 can be outputted to one TV monitor 2. In this example, the video cameras 1 are provided with two signal input systems, and provided with input processing circuits 12 and A/D converters 11, respectively. Video signals which are digitized in the respective A/D converters 11 are accumulated in the frame memory 3 in which images for two screens can be stored, and these images are processed by the computing unit 13, whereby signals required to control the drive control unit 14 of the optical fiber fusion splicer can be generated from the images scanned by the two TV cameras 1. Also, the two signal input systems are provided with scanning conversion units 5 described in Fig. 7 or Fig. 8, respectively, whereby the images filmed by the two TV cameras 1 can be independently rotated by 90°, changed in size, and changed in offset. The video signals outputted from the scanning conversion unit 5 are inputted in the video encoder 8 through the respective D/A converters 28. This video encoder 8 is arranged so as to be inputted with the video signals from the graphic circuit 30, and synthesizes the images of the two TV cameras 1 with the text and graphics in the graphic circuit 30 and outputs them to the TV monitor 2. In this case, the video encoder 8 can dispose each image X and Y filmed by the two TV cameras 1 in parallel and display them on the one TV monitor 2 as shown in Fig. 11, and can reduce the two images X and Y, dispose the parallel and display the entirety of the images on the one TV monitor 2 as shown in Fig. 12, and also can vertically dispose the two images X and Y and display them as shown in Fig. 13.

### (Embodiment 4)

Fig. 14 shows still another example of the image processor for optical fiber observation of the invention, wherein the scanning conversion unit 5 is comprised by using digital signal processor (DSP) (information processor) 7 and a software program. DSP 7 is a processor which is designed to process digitized information such as sound and images, etc., which can rotate the inputted images by 90°, change them in size, and change them in offset. In this case, by using the DSP 7 with high processing performance, the function of the graphic circuit 30 can also be performed by the DSP 7. Also, the DSP 7 is provided with memory 36 having a capacity required for image processing.

### (Embodiment 5)

The image processor for optical fiber observation of the invention can be arranged so that the scanning conversion unit 5 is provided at the rear stage of the video encoder 8 so as to perform rotating images by 90° and adjusting the size and offset of the images after the images are synthesized. In this case, text and graphics, etc., are created in a rotated condition by 90° in the graphic circuit 30 so that the texts and graphics are normally displayed when the images are rotated by 90° at the scanning conversion unit 5.

In addition, the following image processor for optical fiber observation is possible and included in the invention.
① When video signals are different for the TV camera 1 and TV monitor 2, for example, in a case where the TV camera 1 outputs the NTSC signal, and the TV monitor 2 requires the PAL signal, the scanning conversion unit 5 can be provided with a function for performing conversion of such signals. Currently, there exists the NTSC method, PAL method, SECAM method, VGA method, SVGA method and so on for general video signals.
② The TV camera 1 and TV monitor 2 both requiring either analog or digital signals, or one of them may require digital signals and the other one may require analog signals. There exists a composite video, RGB video, S video and so on for analog video signals, and there exists an RGB, YUV, YJK, JPEG and so on for digital video signals.
③ As for the TV camera 1, there are various types such as an image pick-up tube and solid-state image pick-up device, etc., and signals from these are inputted and processed.
④ As for the TV monitor 2, there are various types such as a brown tube, liquid crystal display, and plasma display and so on, and signals are outputted to these.
⑤ In the above respective embodiments, if the process ability of the computing unit 13 is high, the frame memory 3 can be eliminated.
⑥ If the necessary resolution is low or the image renewing speed is high, a field memory is used in place of the frame memory 3, and the image can be renewed for every 1/60 of a second. Also, the field memory may have a half memory capacity of the frame memory.

### Industrial Applicability

As described above, the image processor for optical fiber observation relating to the invention is effective as a device to convert images of optical fibers scanned by a TV camera by 90° and project them on a monitor TV, and in particular, the device is suitable to be installed in a system of an optical fiber fusion splicer to process observation images of the optical fibers at the welding and connecting unit.

## Claims

1. An image processor for optical fiber observation characterized in that, an image processor for optical fiber observation, which can output image signals from TV camera (1) to TV monitor (2), process the images from the TV camera (1), and output desired information concerning optical fibers (4a and 4b) projected as said images, is provided with scanning conversion unit (5) which can rotate the images from the TV camera (1) by 90° and output them to the TV monitor (2).

2. An image processor for optical fiber observation as set forth in Claim 1, wherein the scanning conversion unit (5) is equipped with an image memory unit for scanning conversion (6) so that images which are rotated by 90° are read out and outputted from the image memory unit for scanning conversion (6) by converting a data read/write address in the image memory unit for scanning conversion (6).

3. An image processor for optical fiber observation as set forth in Claim 1, wherein the scanning conversion unit (5) is equipped with information processor (7) and a software program in which an information processing method by means of the information processor is described, and the information processor (7) rotates the images to be inputted in the scanning conversion unit (5) by 90° for output.

4. An image processor for optical fiber observation as set forth in Claim 1, wherein the scanning conversion unit (5) has a function to change one or more of either the vertical magnification, horizontal magnification, vertical offset amount, and/or the horizontal offset amount of images.

5. An image processor for optical fiber observation as set forth in Claim 2, wherein the scanning conversion unit (5) has a function to change one or more of either the vertical magnification, horizontal magnification, vertical offset amount, and/or the horizontal offset amount of images.

6. An image processor for optical fiber observation as set forth in Claim 3, wherein the scanning conversion unit (5) has a function to change one ore more of either the vertical magnification, horizontal magnification, vertical offset amount, and/or the horizontal offset amount of images.

7. An image processor for optical fiber observation as set forth in any of Claims 1 through 6, wherein image synthesizer unit (8) is provided by which signals generated by synthesizing the images scanned by the TV camera (1) with desired information can be outputted to the TV monitor (2).

8. An image processor for optical fiber observation as set forth in Claim 7, wherein the scanning conversion unit (5) is provided at the front stage of the image synthesizer unit (8).

9. An image processor for optical fiber observation as set forth in Claim 7, wherein the scanning conversion unit (5) is provided at the rear stage of the image synthesizer unit (8).

10. An image processor for optical fiber observation as set forth in any of Claims 1 through 6 or Claims 8 or 9, wherein said image processor can be inputted with image signals from two or more TV cameras (1), and can synthesize or switch the image signals to be a signal for one TV monitor (2) for output.

11. An image processor for optical fiber observation as set forth in Claim 7, wherein said image processor is inputted with image signals from two or more TV cameras (1), and can synthesize or switch the image signals to be a signal for one TV monitor (2) for output.
